# FASCICULE DE BREVET EUROPEEN

(11) **EP 2 140 149 B1**
(45) Date de publication et mention de la délivrance du brevet: **16.05.2012**
(21) Numéro de dépôt: 08707708.7
(22) Date de dépôt: 14.02.2008
(51) Int. Cl.: F16B 5/06, F16B 21/06

(54) **AGRAFE DE FIXATION**
BEFESTIGUNGSELEMENT
ATTACHMENT FASTENER

(30) Priorité: 16.03.2007 FR 0701939
(43) Date de publication de la demande: 06.01.2010
(73) Titulaire: A. Raymond et Cie., 38000 Grenoble (FR)
(72) Inventeur: RAYMOND, Antoine, F-38000 Grenoble (FR)
(74) Mandataire: Rüttgers, Joachim
(86) Numéro de dépôt international: PCT/EP2008/001105
(87) Numéro de publication internationale: WO 2008/113438

(56) Documents cités:
- EP-A- 1 452 745
- FR-A- 2 673 249

## Description

L'invention concerne une agrafe de fixation utilisée pour fixer des éléments sur par exemple un véhicule terrestre notamment à moteur, et tout particulièrement pour fixer un panneau sur un support tel qu'une porte de véhicule terrestre à moteur.

On connaît du document de brevet FR-2673249, une telle agrafe de fixation comportant : un corps en matière plastique moulée relativement rigide, muni d'une tête adaptée à se monter au panneau à travers un orifice, d'un pied adapté à se monter au support à travers un orifice, et d'une collerette disposée à la jonction du pied et de la tête, et une rondelle d'étanchéité en matière plastique relativement molle surmoulée sur la périphérie de la collerette pour assurer une étanchéité avec le support.

Le document de brevet GB-2360322 décrit une agrafe de fixation similaire à celle décrite dans le document précédant mais dans laquelle le surmoulage est conçu pour éviter que la rondelle ne s'échappe de la collerette.

Le document de brevet EP-1452745 divulgue une agrafe de fixation d'un panneau sur un support comprenant encore un corps en une première matière plastique qui est muni d'une tête, d'un pied et d'une collerette et une rondelle d'étanchéité souple en matière plastique qui est fixée sur la collerette. Enfin le document de brevet EP-1025368 décrit une agrafe avec plusieurs collerettes.

Le but de l'invention est de renforcer encore plus l'étanchéité procurée par la rondelle d'une agrafe de fixation telle que définie plus haut.

A cet effet, l'invention a pour objet une méthode de fabrication d'une agrafe de fixation comportant : un corps en une première matière plastique moulée relativement rigide, muni d'une tête, d'un pied et d'une collerette disposée à la jonction entre la tête et le pied, et une rondelle d'étanchéité en une seconde matière plastique moulée relativement souple qui est fixée à la périphérie de la collerette, caractérisée en ce qu'elle comprend les étapes consistant à fournir une première matière plastique et une seconde matière plastique compatibles entre elles pour provoquer lors d'une vulcanisation une liaison chimique cohésive, à mouler d'une seule pièce ledit corps (1) et ladite rondelle (5) avec lesdites matières plastique compatibles à l'état brut et à vulcaniser lesdites matières plastique compatibles de ladite pièce pour former ladite liaison cohésive entre ledit corps et ladite rondelle.

L'idée à la base de l'invention est donc de choisir deux matières plastiques différentes mais compatibles et de les polymériser lors du moulage dans des conditions telles à provoquer la liaison cohésive entre la rondelle et la collerette.

L'agrafe selon l'invention trouve à s'appliquer en particulier mais non exclusivement pour la fixation d'un élément sur un support, par exemple un panneau de garnissage des portes d'automobile : le panneau comporte une série d'orifices dans chacun desquels on monte une agrafe, et ensuite on présente le panneau sur la porte ou le support, qui comporte une série d'orifices correspondants dans lesquels s'enclipsent les pieds des agrafes lorsqu'on presse le panneau contre le support. En position fixée, la collerette et la rondelle sont enserrées entre le panneau et le support, la collerette portant contre le panneau et la rondelle contre le support, la coopération de la collerette généralement tronconique et de la rondelle conférant à l'assemblage une excellente étanchéité.

L'invention s'étend à une agrafe de fixation dont la tête est à clipsage, à lanière crantée, à enrubannage, etc pour la fixation de câbles électriques, tubes de conduite ou autres éléments à fixer sur un support muni d'un orifice....

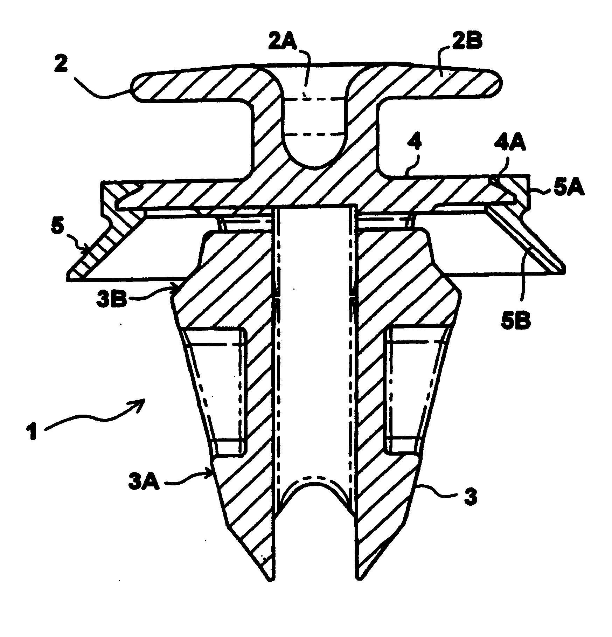

L'invention sera encore mieux comprise à la lecture de la description qui suit et qui est illustrée par le dessin montrant vue en coupe longitudinale une agrafe de fixation d'un panneau sur un support.

Sur la figure unique, on a représenté une agrafe de fixation d'un panneau à un support qui comporte un corps 1 en une première matière plastique moulée relativement rigide, muni d'une tête 2, d'un pied 3 et d'une collerette 4 disposée à la jonction entre la tête et le pied.

La tête 2 comporte un alésage central 2A bordé par un disque annulaire 2B servant de butée pour un blocage de la tête de l'agrafe selon une direction longitudinale.

Le pied 3 est composé d'une âme centrale déformable élastiquement entourée par une jambe formée de deux sections de longueur tronconiques disposées en opposition avec une base commune, l'une 3A formant l'extrémité libre de la jambe dont la pointe est orientée vers cette extrémité, l'autre 3B dont la pointe est orientée vers la tête 2.

La collerette 4 se présente sous la forme d'un disque annulaire dont le bord extérieur périphérique est muni d'un chanfrein. Quand l'agrafe est montée sur le panneau, ce dernier s'intercale entre le disque 2B de la tête et la collerette 4.

L'agrafe comporte également une rondelle d'étanchéité 5 en une seconde matière plastique moulée relativement souple, c'est-à-dire beaucoup plus molle que la première matière plastique constituant le corps de l'agrafe.

La rondelle 5 a un bord intérieur périphérique 5A présentant une gorge intérieure dans laquelle s'engage le chanfrein du bord extérieur de la collerette 4. Elle a également une lèvre périphérique 5B de forme tronconique qui saille depuis le bord 5A du côté du pied 3 et qui s'évase en allant en direction du pied 3.

Selon l'invention, le bord intérieur périphérique de la rondelle 5 est fixé au bord extérieur périphérique de la collerette par une liaison cohésive lors du moulage de l'agrafe. Par conséquent, le corps 1 incluant la tête 2, le pieds 3 et la collerette 4 avec la rondelle 5 sont donc réalisés d'une seule pièce par moulage des deux matières plastiques respectivement du corps 1 et de la rondelle 5.

Ces deux matières plastiques peuvent être des matières thermoplastiques. Elles sont choisies pour être compatibles pour provoquer cette liaison cohésive lors du moulage par injection en une seule étape du corps et de la rondelle de l'agrafe. La liaison peut par exemple se produire en phase de vulcanisation des matières brutes (les molécules une fois placées à l'intérieur du moule de fabrication de l'agrafe bi-matière se combinent entre elles à des températures données favorisant une bonne accroche chimique).

A titre d'exemple on pourra choisir comme couple de matières plastiques compatibles, par exemple :
- un copolymère acétal POMC (type Hostaform C9021 de la société Ticona ou Kepital F20-30 de la société Kep) avec un styrène copolymère TPE-S (type Thermolast K de la société Kraiburg)
- un PA6/PP (type Orgalloy RS6000 de la société Arkema) avec un TPE-S (type Thermolast K ou Vitaprene de la société VTP)
- un PP (type Exxtral CNU011 de la société ExxonMobil) avec un PP/EPDM (type Santoprene de la société ExxonMobil) ou un SEBS (type Multiflex de la société Multibase)

La cohésion chimique (ou adhésion chimique) est donc basée sur la formation de liaisons chimiques iono-covalentes. Ces liaisons sont parmi les plus fortes (de l'ordre de 1000 kJ/mole) et assurent aux assemblages collés une résistance à la rupture importante et une meilleure durabilité ce qui renforce l'étanchéité procurée par la rondelle de l'agrafe selon l'invention.

## Revendications

1. Méthode de fabrication d'une agrafe de fixation par moulage d'un corps (1) en une première matière plastique relativement rigide, muni d'une tête (2), d'un pied (3) et d'une collerette (4) disposée à la jonction entre la tête et le pied, et d'une rondelle d'étanchéité (5) en une seconde matière plastique relativement souple qui est fixée à la périphérie de la collerette, **caractérisée en ce qu'**elle comprend les étapes consistant à fournir une première matière plastique et une seconde matière plastique compatibles entre elles pour provoquer lors d'une vulcanisation une liaison chimique cohésive, à mouler d'une seule pièce ledit corps (1) et ladite rondelle (5) avec lesdites matières plastique compatibles à l'état brut et à vulcaniser lesdites matières plastique compatibles de ladite pièce pour former ladite liaison cohésive entre ledit corps et ladite rondelle.

2. Méthode selon la revendication 1, dans laquelle on fournit des matières plastique compatibles pour former une liaison iono-covalente lors de la vulcanisation.

3. Agrafe de fixation obtenue par une méthode selon l'une des revendications 1 ou 2, comprenant un corps (1) en une première matière plastique relativement rigide, muni d'une tête (2), d'un pied (3) et d'une collerette (4) disposée à la jonction entre la tête et le pied, et une rondelle d'étanchéité (5) en une seconde matière plastique relativement souple qui est fixée à la périphérie de la collerette, **caractérisée en ce que** ladite rondelle (5) comporte une lèvre périphérique (5B) de forme tronconique.

4. Agrafe selon la revendication 3, dans laquelle la tête est adaptée à se monter à un panneau et le pied est adapté à se monter à un support, la rondelle assurant l'étanchéité avec le support.

## Claims

1. Method of producing a fastener by moulding a body (1), which is provided with a head (2), a foot (3) and a collar (4) arranged at the junction between the head and the foot, from a first, relatively rigid, plastics material, and by moulding a sealing washer (5) which is fixed to the periphery of the collar from a second, relatively flexible, plastics material, **characterised in that** it comprises the steps of providing a first plastics material and a second plastics material which are mutually compatible such as to produce a cohesive chemical bond when vulcanisation takes place, of moulding the said body (1) and the said washer (5) in one piece using the said compatible plastics materials in the raw state, and of vulcanising the said compatible plastics materials forming the said one-piece member to create the said cohesive bond between the said body and the said washer.

2. Method according to claim 1, in which plastics materials which are compatible such as to produce an iono-covalent bond at the time of vulcanisation are provided.

3. Fastener obtained by a method according to either of claims 1 and 2, comprising a body (1) of a first, relatively rigid, plastics material which is provided with a head (2), a foot (3) and a collar (4) arranged at the junction between the head and the foot, and a sealing washer (5) of a second, relatively flexible, plastics material which is fixed to the periphery of the collar, **characterised in that** the said washer (5) comprises a peripheral lip (5B) of a frusto-conical shape.

4. Fastener according to claim 3, in which the head is adapted to be fitted to a panel and the foot is adapted to be fitted to a support, the washer producing a seal against the support.

## Patentansprüche

1. Verfahren zur Herstellung eines Befestigungselements durch Formen eines ein Kopfteil (2), ein Fußteil (3) und einen Flansch (4), der an der Verbindung zwischen dem Kopfteil und dem Fußteil angeordnet ist, aufweisenden Körpers (1) aus einem ersten, relativ harten Kunststoffmaterial und einer Dichtungsscheibe (5) aus einem zweiten, relativ weichen Kunststoffmaterial, die an dem Rand des Flanschs befestigt ist, **dadurch gekennzeichnet, dass** es die Schritte aufweist, die darin bestehen, ein erstes Kunststoffmaterial und ein zweites Kunststoffmaterial bereitzustellen, die miteinander kompatibel sind, um während einer Vulkanisation eine kohäsive chemische Verbindung hervorzurufen, den Körper (1) sowie die Scheibe (5) mit den kompatiblen Kunststoffmaterialien im Rohzustand aus einem Stück zu formen und die kompatiblen Kunststoffmaterialien des Stücks zu vulkanisieren, um die kohäsive Verbindung zwischen dem Körper und der Scheibe zu bilden.

2. Verfahren nach Anspruch 1, bei dem kompatible Kunststoffmaterialien bereitgestellt werden, um eine ionokovalente Verbindung während der Vulkanisation zu bilden.

3. Befestigungselement, das durch ein Verfahren nach einem der Ansprüche 1 oder 2 hergestellt ist, das einen ein Kopfteil (2), ein Fußteil (3) und einen Flansch (4), der an der Verbindung zwischen dem Kopfteil und dem Fußteil angeordnet ist, aufweisenden Körper (1) aus einem ersten, relativ harten Kunststoffmaterial und eine Dichtungsscheibe (5) aus einem zweiten, relativ weichen Kunststoffmaterial aufweist, die an dem Rand des Flanschs befestigt ist, **dadurch gekennzeichnet, dass** die Scheibe (5) eine kegelstumpfartige Randlippe (5B) aufweist.

4. Element nach Anspruch 3, bei dem das Kopfteil dazu eingerichtet ist, an einer Platte angebracht zu werden, und das Fußteil dazu eingerichtet ist, an einem Träger angebracht zu werden, wobei die Scheibe die Abdichtung mit dem Träger sicherstellt.
